# EUROPEAN PATENT APPLICATION

(11) **EP 4 814 730 A1**
(43) Date of publication of application: **30.09.2026**
(21) Application number: 26164884.4
(22) Date of filing: 16.03.2026
(51) Int. Cl.: G06F 12/0862, G06F 12/127, G06N 3/0475, G06N 3/063, G06F 12/0895, G06F 12/123

(54) **DATA PROCESSING SYSTEM AND COMPUTING DEVICE OPERATING METHOD**

(30) Priority: 26.03.2025 KR 20250038790
(71) Applicant: SK hynix Inc., Bubal-eup Icheon-si, Gyeonggi-do 17336 (KR)
(72) Inventor: AHN, Soo Hong, 17336 Icheon-si, Gyeonggi-do (KR)
(74) Representative: Isarpatent

(57) **Abstract**

The present disclosure provides a data processing system including a first memory device, a second memory device operating at a slower speed than the first memory device, and a computing device generating a queue storing an order in which a plurality of layers are performed based on a plurality of register commands received from a host, and moving input data for performing each of the plurality of layers from the second memory device to the first memory device before each of the plurality of layers is performed according to the order stored in the queue.

## Description

### BACKGROUND

### 1. Field

Various embodiments of the present disclosure generally relate to a data processing system, and more particularly to a data processing system and a method of operating a computing device included in the data processing system.

### 2. Related Art

A heterogeneous memory system includes memory devices with different operating speeds. Specifically, a heterogeneous memory system includes a memory having a relatively high operating speed and a memory having a relatively low operating speed. Generally, faster memory devices have smaller storage capacities, while slower memory devices have larger storage capacities.

As a result, to improve the performance of a heterogeneous memory system with limited storage capacity, it is necessary to store hot data with high frequency requested by a host in a memory device with a fast operating speed and cold data with low frequency requested by the host in a memory device with a slow operating speed. Therefore, rapid data migration between memory devices may be important.

### SUMMARY

Various embodiments of the present disclosure are directed to a data processing system capable of performing rapid data migration, and a method of operating a computing device included in the data processing system.

According to an aspect of embodiments of the present disclosure, a data processing system may include a first memory device, a second memory device operating at a slower speed than the first memory device, and a computing device generating a queue storing an order in which a plurality of layers are performed based on a plurality of register commands received from a host, and moving input data for performing each of the plurality of layers from the second memory device to the first memory device before each of the plurality of layers is performed according to the order stored in the queue.

In one or more embodiments, the computing device determines input data of a previous layer as a first target data to be moved from the first memory device to the second memory device, and determines input data of a next layer as a second target data to be moved from the second memory device to the first memory device, based on the queue, wherein the previous layer and the next layer are determined relative to a current layer being performed by the computing device in the order stored in the queue.

In one or more embodiments, the computing device may further receive an attribute command from the host, and may include: a decoder decoding the attribute command to generate a first decoding signal including information regarding a type of the queue, and a second decoding signal including information regarding a number of data to be stored in the first memory device, and a queue management unit generating the queue based on the first decoding signal, determining data to be moved from the second memory device to the first memory device based on the second decoding signal, and storing the queue.

In one or more embodiments, the decoder may decode the attribute command to generate a third decoding signal including information regarding a migration operation mode, and the migration operation mode may be one of an active mode for determining the first target data based on the order stored in the queue, and a manual mode for determining the first target data based on a trigger command received from the host.

In one or more embodiments, the decoder may receive first to Nth register commands from the host, and decode the first to Nth register commands to generate first to Nth register signals, when the queue management unit sequentially receives the first to Nth register signals from the decoder, the queue management unit may sequentially store first to Nth data corresponding to the first to Nth register signals in the queue in an order in which the first to Nth register signals are received, the first to Nth data may correspond to input data of first to Nth layers, and N may be a natural number greater than 1.

In one or more embodiments, when the migration operation mode is the active mode, the queue management unit may determine the input data used in the previous layer performed by the computing device as the first target data, based on the order stored in the queue.

In one or more embodiments, when the migration operation mode is the active mode, the queue management unit may determine a first data, which is input data of a first layer preceding a second layer, as the first target data, based on the computing device accessing second data.

In one or more embodiments, when the migration operation mode is the manual mode, the decoder may receive a trigger command from the host and decodes the trigger command to generate a trigger signal, and the queue management unit may determine data corresponding to the trigger signal as the first target data.

In one or more embodiments, a point in time at which the first data is determined to be the first target data when the migration operation mode is the manual mode may be earlier than a point in time at which the first data is determined to be the first target data when the migration operation mode is the active mode.

In one or more embodiments, the decoder may receive the trigger command after the decoder receives the Nth register command.

In one or more embodiments, the queue management unit may determine the second target data based on the number of data to be stored in the first memory device and the first target data.

In one or more embodiments, a Kth data may be determined as the second target data when the number of data to be stored in the first memory device is 'K-1', and the first data is the first target data, and K may be greater than 1 and less than N.

In one or more embodiments, the computing device may further include: a first memory controller managing an eviction operation to move the first target data stored in the first memory device to the second memory device, and a second memory controller managing a prefetch operation to move the second target data stored in the second memory device to the first memory device.

In one or more embodiments, when the migration operation mode is the active mode, based on the computing device accessing new input data, the queue management unit may output an eviction signal instructing the eviction operation to the first memory controller, and output a prefetch signal instructing the prefetch operation to the second memory controller, the first memory controller may perform the eviction operation based on the eviction signal, and may output a done signal to the second memory controller when the eviction operation is completed, and the second memory controller may perform the prefetch operation based on the prefetch signal and the done signal.

In one or more embodiments, when the migration operation mode is the manual mode, the queue management unit may output the eviction signal instructing the eviction operation to the first memory controller, and may output the prefetch signal instructing the prefetch operation to the second memory controller when the queue management unit receives the trigger signal.

In one or more embodiments, the type of the queue may include a ring-buffer type or a linear type.

According to an aspect of embodiments of the present disclosure, a method of operating a computing device controlling a first memory device and a second memory device operating at a slower speed than the first memory device may include receiving a plurality of register commands from a host, storing an order in which a plurality of layers are performed in a queue, based on the plurality of register commands, determining a first target data to be moved from the first memory device to the second memory device, based on the queue, and determining a second target data to be moved from the second memory device to the first memory device.

In one or more embodiments, creating, by the computing device, the queue may include storing data corresponding to each of the plurality of register commands in the queue in an order in which the plurality of register commands are received.

In one or more embodiments, after creating the queue, receiving a trigger command from the host may be further included, the determining the first target data may include determining input data used in a layer corresponding to the trigger command as the first target data in response to receiving the trigger command, and the determining the second target data may include determining the second target data based on information regarding a number of data to be stored in the first memory device and the first target data.

In one or more embodiments, the determining the first target data may include determining data having a queue index prior to a queue index of selected data as the first target data, when the computing device accesses the selected data after creating the queue, and the determining the second target data may include determining the second target data based on information regarding a number of data to be stored in the first memory device and the first target data.

### BRIEF DESCRIPTION OF THE DRAWINGS

FIG. 1 is a block diagram illustrating a data processing system according to an embodiment of the present disclosure;
FIG. 2 is a block diagram illustrating a computing device according to an embodiment of the present disclosure;
FIG. 3 is a diagram illustrating a queue configured as a ring-buffer type according to an embodiment of the present disclosure;
FIG. 4 is a diagram illustrating a configuration of a linear type queue according to an embodiment of the present disclosure;
FIG. 5 is a diagram illustrating a migration operation performed according to an embodiment of the present disclosure;
FIG. 6 is a flowchart illustrating a migration operation according to one embodiment of the present disclosure; and
FIG. 7 is a flowchart illustrating a migration operation according to another embodiment of the present disclosure.

### DETAILED DESCRIPTION

Hereinafter, example embodiments of the present disclosure will be described in further detail with reference to the accompanying drawings. It is noted that in the following description, the components or parts necessary to understand the operation according to the present disclosure will be described, and descriptions of other components or parts may be omitted in order to not obscure the gist of the present disclosure. In addition, the present disclosure is not limited to the embodiments described herein and may be embodied in other forms. The embodiments described herein are provided to explain the present disclosure in further detail so as to enable those skilled in the art to implement the technical ideas of the present disclosure.

Terms used herein are for describing specific embodiments and are not intended to limit the present disclosure. Throughout the specification, in a case in which a certain portion "includes," the case means that the portion may further include another component without excluding another component unless otherwise stated. "At least one of X, Y, and Z," "at least one of X, Y, or Z," and "at least one selected from the group consisting of X, Y, and Z" may be construed as X only, Y only, Z only, any combination of two or more of X, Y, and Z, such as, for instance, XYZ, XYY, YZ, and ZZ, or any variation thereof. The term "and/or" includes any and all combinations of one or more of the associated listed items.

Here, terms such as "first" and "second" may be used to describe various components, but these components are not limited to these terms. These terms are used to distinguish one component from another component. Therefore, a "first" component may refer to a second component within a range without departing from the scope disclosed herein.

In this field, some embodiments are described in the accompanying drawings in relation to functional blocks, units, and/or modules. Those skilled in the art will understand that such blocks, units, and/or modules are physically implemented by electronic (or optical) circuits such as logic circuits, discrete components, microprocessors, hard-wired circuits, memory elements, and wiring connections, which may be formed using a semiconductor-based manufacturing technique or other manufacturing techniques. The blocks, units, and/or modules implemented by microprocessors or other similar hardware may be programmed and controlled using software (e.g., micro codes) to perform various functions discussed herein, and may optionally be driven by firmware and/or software.

In addition, each block, unit, and/or module may be implemented by dedicated hardware, or a combination of dedicated hardware that performs some functions and a processor (for example, one or more programmed microprocessors and related circuits) that performs a function different from those of the dedicated hardware. In addition, in some embodiments, each block, unit, and/or module may be physically separated into two or more interacting individual blocks, units, and/or modules without departing from the scope of the present disclosure. In addition, in some embodiments, the block, unit and/or module may be physically combined into more complex blocks, units, and/or modules without departing from the scope of the present disclosure.

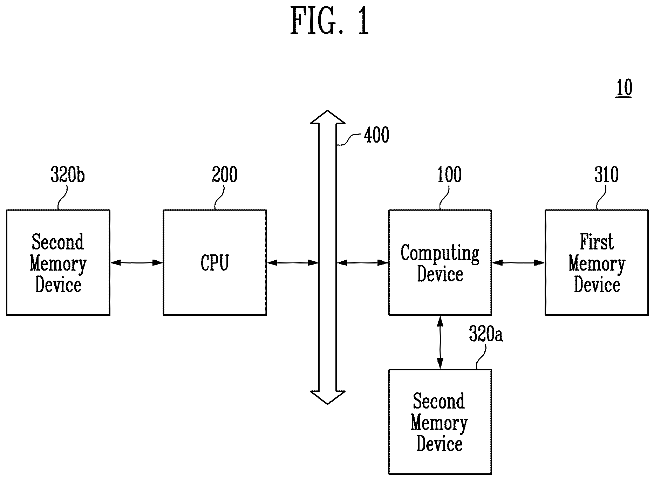

FIG. 1 is a block diagram illustrating a data processing system according to an embodiment of the present disclosure.

Referring to FIG. 1, a data processing system 10 may include a computing device 100, a central processing unit (CPU) 200, a first memory device 310, and second memory devices 320a and 320b.

The data processing system 10 may be any kind of system that processes data and writes the processed data to the first memory device 310 and/or the second memory devices 320a and 320b, or processes data read from the first memory device 310 and/or the second memory devices 320a and 320b.

For example, the data processing system 10 may be implemented as a data server, a cloud system, an artificial intelligence server, a network-attached storage (NAS), an Internet of Things (IoT) device, a personal computer (PC), or a portable electronic device.

Further, when the data processing system 10 is a portable electronic device, the data processing system 10 may be a laptop computer, a mobile phone, a smartphone, a tablet PC, a personal digital assistant (PDA), an enterprise digital assistant (EDA), a digital still camera, a digital video camera, an audio device, a portable multimedia player (PMP), a personal navigation device (PND), an MP3 player, a handheld game console, an e-book, a wearable device, or the like.

The computing device 100 may perform operations in a parallel fashion by processing multiple instructions at once. In embodiments, the computing device 100 may perform rendering necessary to output an image. In addition, the computing device 100 may perform complex operations such as geometry calculations, scalar and vector floating point calculations, and the like. For example, the computing device 100 may be implemented as a Graphic Processing Unit (GPU).

In embodiments, the computing device 100 may use a large language model (LLM) to perform inference operations. An inference operation may be a process in which a large language model generates an output, which corresponds to a received input based on the knowledge that the large language model (LLM) has learned. The inference operation may be an actual calculation or a prediction made by the model in response to a given question or command.

The large language model (LLM) may include multiple layers with the same structure connected together. The computing device 100 may process the current layer based on input data (e.g., parameters for performing a layer) and output data from the previous layer. The output data generated by the current layer may be transferred to the next layer. This allows the LLM to progressively abstract data and learn complex patterns.

For example, the large language model (LLM) may have a structure in which layers each including a self-attention block and a feedforward neural network block are repeatedly performed.

The computing device 100 may operate as a host with respect to the first memory device 310 and the second memory device 320a. The first memory device 310 may store data or provide read data to the computing device 100 in response to a command and an address received from the computing device 100. The second memory device 320a may store data or provide read data to the computing device 100 in response to a command and an address received from the computing device 100.

In embodiments, the first memory device 310 and the second memory device 320a may be memory devices dedicated to the computing device 100. The first memory device 310 may serve as a frame buffer, a texture map, and/or a storage array. The second memory device 320a may store instructions provided by the computing device 100.

The central processing unit 200 may control the overall operation of the data processing system 10. By providing instructions to the computing device 100, the central processing unit 200 may control the operations of the computing device 100.

The central processing unit 200 may operate as a host with respect to the computing device 100 and the second memory device 320b. The second memory device 320b may store data or provide read data to the central processing unit 200 in response to a command and an address received from the central processing unit 200. In an embodiment, the second memory device 320b may store instructions provided by the central processing unit 200.

The computing device 100 and the central processing unit 200 may communicate via a bus format using a bus 400. For example, the bus format may include an interface protocol such as Peripheral Component Interconnect Express (PCIe), NVLink, or the like.

The first memory device 310 and the second memory devices 320a and 320b may be different types of memory devices. Specifically, the operating speed of the first memory device 310 may be faster than the operating speed of each of the second memory devices 320a and 320b. The operating speed may include a write speed to store data and a read speed to read the stored data.

For example, the first memory device 310 may be configured as high bandwidth memory (HBM) or graphics double data rate (GDDR), and each of the second memory devices 320a and 320b may be configured as low power double data rate (LPDDR) or double data rate (DDR).

The capacity of the first memory device 310 may be smaller than the capacity of each of the second memory devices 320a and 320b. To compensate for the smaller capacity of the first memory device 310, the computing device 100 may access and use the second memory device 320a as well as the first memory device 310.

However, since the operating speed of the second memory device 320a is slower than the first memory device 310, performance degradation of the data processing system 10 may occur when frequently processed data or data scheduled for processing is stored in the second memory device 320a. To compensate for this, the computing device 100 may control data migration operations between the first memory device 310 and the second memory device 320a.

A migration operation may be performed to move or copy data between the first memory device 310 and the second memory device 320a. A data migration operation may include a prefetch operation and an eviction operation. The prefetch operation may be performed to pre-store target data from the second memory device 320a in the first memory device 310, which is scheduled for processing by the computing device 100. The eviction operation may be an operation in which the computing device 100 accesses the first memory device 310, having stored target data that has been processed, and stores the processed target data in the second memory device 320a.

That is, the performance of the data processing system 10 may be optimized by preparing target data in advance in the first memory device 310, which has a faster operating speed than the second memory device 320a, and moving the target data already processed in the first memory device 310 to the second memory device 320a.

The computing device 100 may process layers of a large language model through the first memory device 310 and the second memory device 320a, and may store input data and output data for each of the layers. During this process, the computing device 100 may perform a migration operation between the first memory device 310 and the second memory device 320a.

However, when a migration operation is performed by categorizing data as hot or cold based on the frequency of data access, workload characteristics may be not reflected. Also, it may not be possible to perform the migration operations quickly. Therefore, it is necessary to perform a fast migration operation that also reflects the workload characteristics of inferential operations.

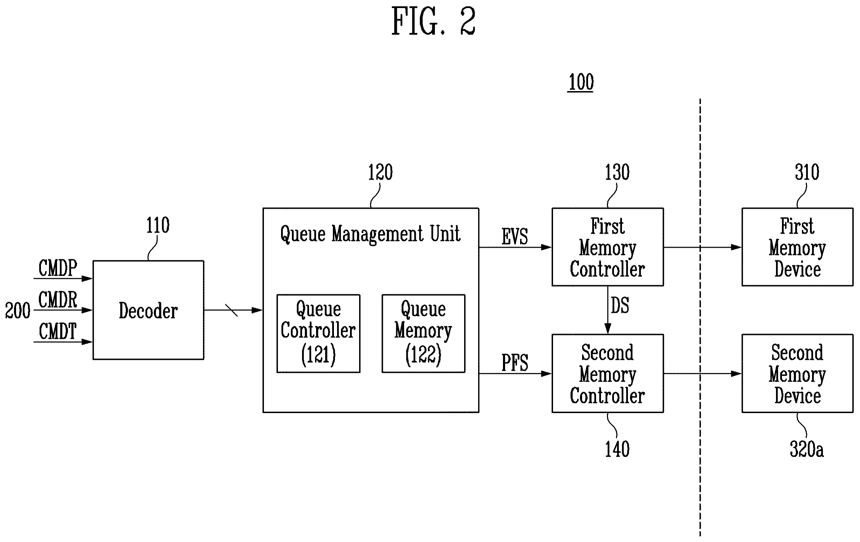

FIG. 2 is a block diagram illustrating a computing device according to an embodiment of the present disclosure.

Referring to FIG. 2, a computing device 100 may include a decoder 110, a queue management unit 120, a first memory controller 130, and a second memory controller 140. For ease of description, only the configuration required for the migration operation is illustrated in FIG. 2, and the computing device 100 may further include other configurations other than the configuration shown in FIG. 2.

The decoder 110 may receive an attribute command CMDP, a register command CMDR, and a trigger command CMDT from the central processing unit 200.

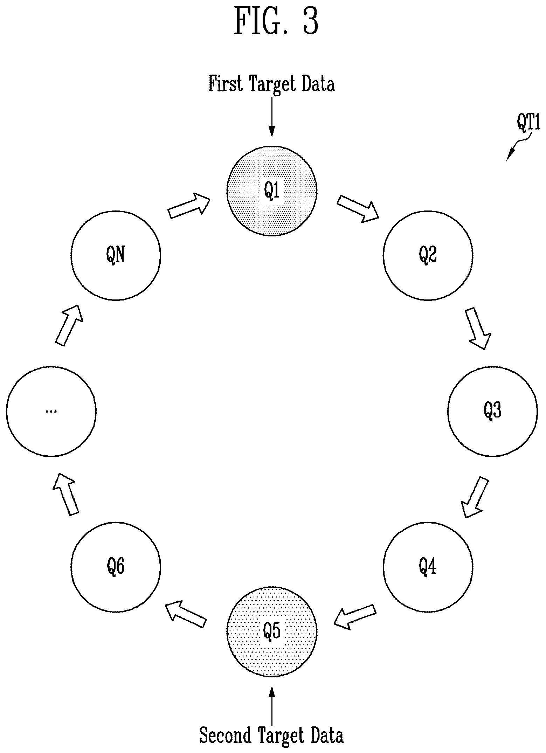

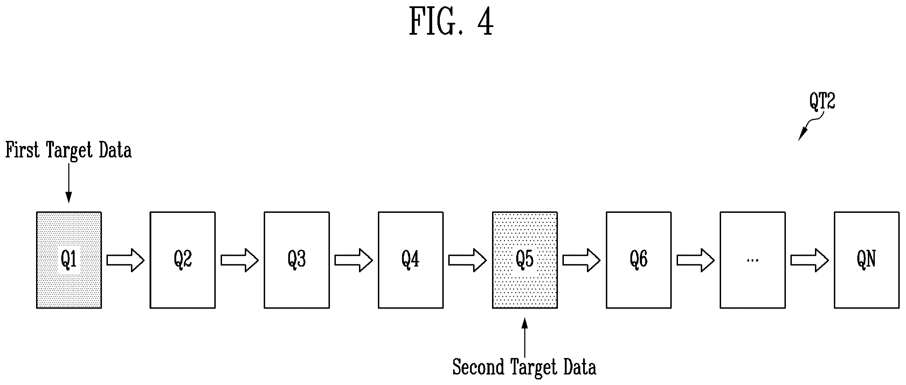

The attribute command CMDP may determine the type of queue stored in the queue management unit 120, a number of data to reside in the first memory device 310, and a migration operation mode. In an embodiment, the type of queue may be, for example, one of a ring-buffer type and a linear type. A more detailed description thereof will be provided below with reference to FIGS. 3 and 4.

In an embodiment, the migration operation mode may be one of a manual mode and an active mode. The manual mode and the active mode may be distinguished based on whether the queue management unit 120 performs a migration operation based on the trigger command CMDT, according to information in the attribute command CMDP. In other words, the manual mode and the active mode may be distinguished based on whether user intervention(i.e., an explicit trigger command CMDT issued by the central processing unit 200) is involved when the queue management unit 120 performs the migration operation.

When the decoder 110 receives the attribute command CMDP, the decoder 110 may decode the attribute command CMDP to generate a first decoding signal, a second decoding signal, and a third decoding signal. The decoder 110 may output the first decoding signal, the second decoding signal, and the third decoding signal to the queue management unit 120.

The queue management unit 120 may include a queue controller 121 and a queue memory 122. The queue controller 121 may generate a queue based on the first decoding signal and the register signal, and store the generated queue in the queue memory 122. The queue may store information regarding a scheduled order of data access by the computing device 100.

The first decoding signal may include information about a type of queue, the second decoding signal may include information about a number of data to be stored in the first memory device 310, and the third decoding signal may include information about a migration operation mode.

Based on the first decoding signal, the queue management unit 120 may determine a type of queue to be stored in the queue management unit 120. Based on the second decoding signal, the queue management unit 120 may determine data to be prefetched to the first memory device 310. Based on the third decoding signal, the queue management unit 120 may perform the migration operation in a manual mode or an active mode.

The register command CMDR may include information regarding a starting location of a memory address at which data is stored and the size of the data. The register command CMDR may be a command for storing data requested from the central processing unit 200 in the queue.

When the decoder 110 receives the register command CMDR, the decoder 110 may decode the register command CMDR to generate a register signal. The decoder 110 may output the register signal to the queue management unit 120. The queue management unit 120 may store data in the queue based on the register signal.

In an embodiment, the decoder 110 may receive a plurality of register commands (CMDR) from the central processing unit 200. For example, the plurality of register commands CMDR may be commands for storing input data for performing layers of a large language model. A first register command of the plurality of register commands CMDR may direct the storing of input data corresponding to a first layer in the queue of computing device 100, and a second register command of the plurality of register commands CMDR may be for storing input data corresponding to a second layer in the queue of computing device 100.

Further, data may be stored in a queue in the order in which the plurality of register commands CMDR are received. For example, when the decoder 110 receives a first register command of the plurality of register commands CMDR and then receives a second register command of the plurality of register commands CMDR, data corresponding to the first register command CMDR may be stored in a queue before data corresponding to the second register command CMDR is stored in the queue. In other words, through the plurality of register commands CMDR, the central processing unit 200 may store data in a queue in the order in which the computing device 100 performs layered processing of data in the queue.

The trigger command CMDT may be a command that instructs an eviction operation for data for which access has been completed, when the attribute command CMDP includes a migration operation mode that refers to a manual mode. In an embodiment, the central processing unit 200 may inform the queue management unit 120 of a completion time point of access to the data through the trigger command CMDT.

When the migration operation mode is a manual mode, if the trigger command CMDT is received from the central processing unit 200, then the decoder 110 may output a trigger signal to the queue management unit 120. In response to the trigger signal, the queue management unit 120 may perform a migration operation. The trigger signal may be a signal that instructs an eviction operation for data corresponding to the trigger command CMDT (e.g., data for which access has been completed by the computing device 100).

In another embodiment, the decoder 110 may receive the attribute command CMDP and the register command CMDR from the central processing unit 200 when the attribute command CMDP includes a migration operation referring to an active mode. The decoder 110 may receive the register command CMDR after receiving the attribute command CMDP from the central processing unit 200.

When the attribute command CMDP includes a migration operation which refers to a manual mode, the decoder 110 may receive the attribute command CMDP, the register command CMDR, and the trigger command CMDT from the central processing unit 200. The decoder 110 may receive the attribute command CMDP after receiving the register command CMDR from the central processing unit 200. The decoder 110 may receive the trigger command CMDT after receiving the register command CMDR from the central processing unit 200.

In embodiments, when the computing device 100 performs inference operations over a large language model, the computing device 100 may iteratively perform layers of processing, each layer including a self-attention block and a feedforward neural network block. For example, the computing device 100 may perform a second layer after performing a first layer. The output data of the first layer may be transferred to the second layer.

Since the order of data access for performing the layers by the computing device is clearly defined in the queue via the plurality of register commands CMDR, the queue controller 121 may distinguish data for which access by the computing device 100 has been completed from data which is scheduled to be accessed, depending on which layer is currently being performed.

For example, when the computing device 100 performs the first layer processing, data for which access has been completed may be input data for performing layers prior to the first layer, and data which is scheduled to be accessed may be input data for layers subsequent to the first layer.

Referring to FIG. 1, the queue controller 121 may move the input data for performing each of the plurality of layers from a second memory device 320b to a first memory device 310 before each of the plurality of layers is performed. The queue controller 121 may determine input data of a layer previous to the first layer as a first target data, and input data of a layer subsequent to the first layer as a second target data.

The first target data may be data for which access has been completed by the computing device 100. In embodiments, accessing data may mean reading or writing the data. The first target data may be data that is moved from the first memory device 310 to the second memory device 320a.

The second target data may be data that is scheduled to be accessed by the computing device 100. The second target data may be data that is moved from the second memory device 320a to the first memory device 310.

The queue controller 121 may determine data to be prefetched to the first memory device 310 based on the second decoding signal, and may perform a migration operation based on the third decoding signal and the trigger signal. The queue controller 121 may perform the migration operation by outputting an eviction signal EVS to the first memory controller 130 and a prefetch signal PFS to the second memory controller 140.

In an embodiment, when the migration operation mode is a manual mode, the queue controller 121 may determine the first target data based on a trigger signal received from the decoder 110. For example, when the queue controller 121 receives the trigger signal from the decoder 110, the queue controller 121 may determine data corresponding to the trigger signal as the first target data. Further, the queue controller 121 may determine the second target data based on the first target data and the second decoding signal.

When the migration operation mode is the manual mode, if the queue controller 121 receives the trigger signal from the decoder 110, the queue controller 121 may output the eviction signal EVS corresponding to the first target data to the first memory controller 130 and the prefetch signal PFS corresponding to the second target data to the second memory controller 140.

In an embodiment, when the migration operation mode is an active mode, the queue controller 121 may determine the first target data based on the order stored in the queue. Based on the queue, the queue controller 121 may determine that access to the input data, in a layer before a layer where new data is used as input data, has been completed.

For example, the computing device 100 may determine that access to a (K-1)th data has been completed when the computing device 100 accesses a Kth data. The (K-1)th data may be input data for performing the first layer, and the Kth data may be input data for performing the second layer, which is the next layer after the first layer.

Accordingly, when the migration operation mode is the active mode, the queue controller 121 may output the eviction signal EVS to the first memory controller 130, which instructs an eviction operation for the (K-1)th data when the computing device 100 accesses the Kth data, where K is a natural number greater than one.

When the migration operation mode is the active mode, the queue controller 121 may determine the first target data if the computing device 100 accesses new data, such as input data required for performing a subsequent layer, and may determine the second target data based on the first target data and the second decoding signal.

In an embodiment, when the migration operation mode is a manual mode, the queue controller 121 may determine the Kth data as the first target data when a trigger signal corresponding to the Kth data is received. The trigger signal corresponding to the Kth data may be received before the computing device 100 accesses a (K+1)th data. On the other hand, when the migration operation mode is an active mode, the queue controller 121 may determine the Kth data as the first target data when the computing device 100 accesses the (K+1)th data.

As a result, the time to determine the Kth data as the first target data when the migration operation mode is the manual mode may be earlier than the time to determine the Kth data as the first target data when the migration operation mode is the active mode.

When the migration operation mode is the active mode, the queue controller 121 may output the eviction signal EVS corresponding to the first target data to the first memory controller 130 and the prefetch signal PFS corresponding to the second target data to the second memory controller 140 when the computing device 100 accesses the new data.

Based on the eviction signal EVS, the first memory controller 130 may evict the first target data stored in the first memory device 310 to the second memory device 320a. The first memory controller 130 may output a done signal DS to the second memory controller 140 when the eviction operation for the target data is completed.

Based on the prefetch signal PFS and the done signal DS, the second memory controller 140 may prefetch the second target data stored in the second memory device 320a to the first memory device 310.

The prefetch operation may be performed after the completion of the eviction operation, as the second memory controller 140 prefetches the second target data stored in the second memory device 320a to the first memory device 310 after receipt of the done signal DS as well as the prefetch signal PFS.

Referring to FIG. 2, the first memory controller 130 and the second memory controller 140 are shown as separate configurations, but the present disclosure is not limited thereto. According to other embodiments, the first memory controller 130 and the second memory controller 140 may be integrated within a single system on chip.

In an embodiment, the queue controller 121 may set a (K+3)th data as the second target data based on the second decoding signal indicating that four data reside in the first memory device 310 and the (K-1)th data is the first target data.

In an embodiment, the queue controller 121 may output the prefetch signal PFS instructing the second memory controller 140 to prefetch the (K+3)th data when the computing device 100 accesses the Kth data, or when the queue controller 121 receives the trigger signal corresponding to the Kth data.

FIG. 3 is a diagram illustrating a queue configured as a ring-buffer type according to an embodiment of the present disclosure.

As shown in FIG. 3, a queue QT1 stores N data values and is configured as a ring-buffer type.

Referring to FIGS. 2 and 3, a queue controller 121 may generate a queue QT1 including N data spaces based on the first decoding signal indicating a ring-buffer type queue and N register signals received from the decoder 110. The queue QT1 may be stored in a queue memory 122.

The queue controller 121 may receive the first to Nth register signals sequentially. For example, the queue controller 121 may receive a register signal corresponding to a first data space Q1 followed by a register signal corresponding to a second data space Q2. The first data space Q1 may have a front index. An Nth data space QN may have a rear index. Data may be stored in each of the first to Nth data spaces Q1 to QN.

The queue QT1 may provide information for managing the order in which the computing device 100 accesses the data. In an embodiment, the queue QT1 may store an order of a plurality of layers included in a large language model. The order may be represented by the sequence in which the register commands are received from the host. Each entry may be stored in the queue according to the reception order. For example, the queue controller 121 may determine, based on the queue QT1, that the computing device 100 will access the data stored in the first data space Q1 having the front index first, followed by the data stored in the second data space Q2.

The queue controller 121 may receive a plurality of register commands (CMDR) from the central processing unit 200 to create the queue QT1 in the order in which the computing device 100 accesses the data. After the queue QT1 is created, the queue controller 121 may perform a migration operation between the first memory device 310 and the second memory device 320a in the order stored in the queue QT1. In this regard, the queue QT1 stores data corresponding to the respective layers in the order in which the register commands are received from the host. This order corresponds to the order in which the layers are to be performed.

In an embodiment, the queue controller 121 may determine a second target data based on the order stored in the queue QT1. For example, when a first target data is stored in the first data space Q1, and the second decoding signal indicates that four data reside in the first memory device 310, the queue controller 121 may determine data stored in a fifth data space Q5 as the second target data.

Here, the number of data determined to reside in the first memory device 310 may correspond to data entries stored in data spaces of the queue QT1, the data spaces being determined based on a front index and a specified number of entries.

When the migration operation mode is a manual mode, the queue controller 121 generates an eviction signal EVS instructing an eviction operation for the first target data (e.g., the data stored in the first data space Q1) and a prefetch signal PFS instructing a prefetch operation for the second target data (e.g., the data stored in the fifth data space Q5) when a trigger signal corresponding to the data stored in the first data space Q1 is received from the decoder 110.

In an embodiment, when the migration operation mode is the manual mode, and when the computing device 100 has completed the access to the data stored in the first data space Q1, the decoder 110 may receive the trigger command CMDT corresponding to the data stored in the first data space Q1 from the central processing unit 200. The decoder 110 may decode the trigger command CMDT to generate a trigger signal corresponding to the data stored in the first data space Q1, and may output the generated trigger signal to the queue controller 121.

When the migration operation mode is an active mode, the queue controller 121 may determine, when the computing device 100 accesses selected data, data having a queue index earlier than a queue index of the selected data as the first target data.

For example, the queue controller 121 may determine the data stored in the first data space Q1 as the first target data based on accessing the data stored in the second data space Q2.

After determining the first target data, the queue controller 121 may generate an eviction signal EVS to instruct an eviction operation for the first target data (e.g., the data stored in the first data space Q1) and a prefetch signal PFS to instruct a prefetch operation for the second target data (e.g., the data stored in the fifth data space Q5).

FIG. 4 is a diagram illustrating a configuration of a linear type queue according to an embodiment of the present disclosure.

Referring to FIG. 4, a queue QT2, which stores N data values, is configured as a linear type queue.

Referring to FIGS. 2 and 4, a queue controller 121 may generate the queue QT2 including N data spaces based on a first decoding signal indicating a linear type, and N register signals received from a decoder 110.

The queue QT1 of FIG. 3 and the queue QT2 of FIG. 4 differ only in form, but the operations of the queue controller 121 are similar. Thus, redundant description may be omitted.

The queue controller 121 may receive the first to Nth register signals sequentially. For example, the queue controller 121 may receive a register signal corresponding to the first data space Q1 before receiving a register signal corresponding to the second data space Q2.

The first data space Q1 may have a front index. The Nth data space QN may have a rear index. Data may be stored in each of the first to Nth data spaces Q1 to QN.

In an embodiment, when a first target data is stored in the first data space Q1 and the second decoding signal indicates that four data reside in the first memory device 310, the queue controller 121 may set the data stored in the fifth data space Q5 as a second target data.

When the migration operation mode is a manual mode and a trigger signal corresponding to the data stored in the first data space Q1 is received from the decoder 110, the queue controller 121 may generate an eviction signal EVS instructing an eviction operation for the first target data (e.g., the data stored in the first data space Q1) and a prefetch signal PFS instructing a prefetch operation for the second target data (e.g., the data stored in the fifth data space Q5).

In an embodiment, when the computing device 100 has completed the access to the data stored in the first data space Q1, the decoder 110 may receive the trigger command CMDT corresponding to the data stored in the first data space Q1 from the central processing unit 200. The decoder 110 may decode the trigger command CMDT to generate a trigger signal corresponding to the data stored in the first data space Q1, and may output the generated trigger signal to the queue controller 121.

When the migration operation mode is an active mode, the queue controller 121 may determine, when the computing device 100 accesses selected data, data having an earlier queue index, compared to a queue index of the selected data, as the first target data.

For example, the queue controller 121 may determine the data stored in the first data space Q1 as the first target data based on accessing the data stored in the second data space Q2.

After determining the first target data, the queue controller 121 may generate an eviction signal EVS instructing an eviction operation for the first target data (e.g., the data stored in the first data space Q1) and a prefetch signal PFS instructing a prefetch operation for the second target data (e.g., the data stored in the fifth data space Q5).

In FIGS. 3 and 4, the queues have a ring-buffer type and a linear type respectively, but the present disclosure is not limited thereto, and queues having various types or structures may be created according to other embodiments.

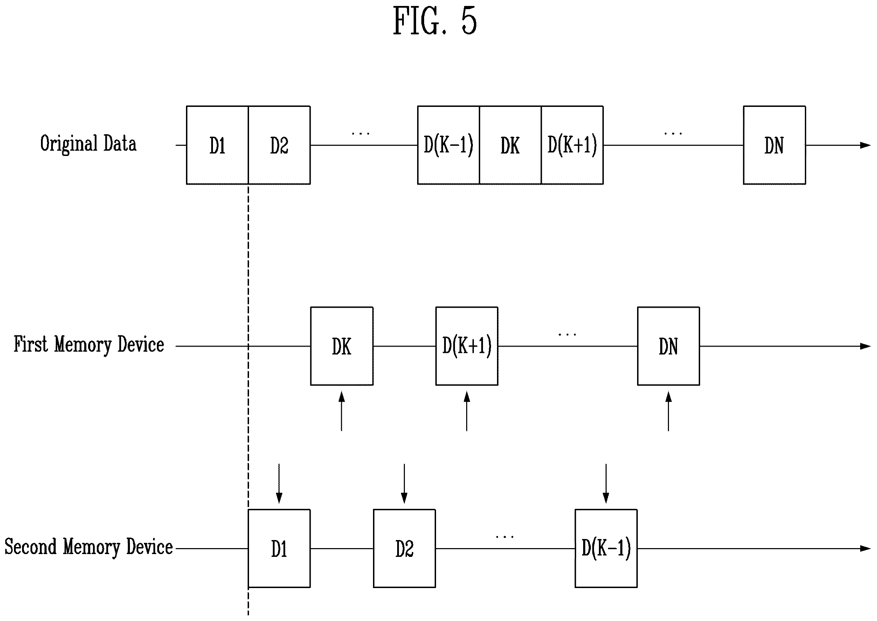

FIG. 5 is a diagram illustrating a migration operation performed according to an embodiment of the present disclosure.

Referring to FIGS. 2 and 5, a migration operation is performed between a first memory device 310 and a second memory device 320a.

In FIG. 5, a computing device 100 sequentially accesses a first data D1 to an Nth data DN, and initially at least D1 to D(K-1) data reside in the first memory device 310, where K is a natural number greater than 1 and N is a natural number greater than K.

Information about the order in which the computing device 100 sequentially accesses the first data D1 to the Nth data DN may be stored in a queue QT1 as shown in FIG. 3 or a queue QT2 as shown in FIG. 4. For example, the first data D1 may be stored in a first data space Q1 and the Nth data DN may be stored in an Nth data space QN.

When the migration operation mode is a manual mode, the queue controller 121 may generate an eviction signal EVS instructing an eviction operation for a first target data (e.g., the first data D1) and a prefetch signal PFS instructing a prefetch operation for a second target data (e.g., a Kth data DK) when a trigger signal corresponding to the first data space Q1 is received from the decoder 110.

Based on the eviction signal EVS, the first memory controller 130 may evict the first data D1 stored in the first memory device 310 to the second memory device 320a. The first memory controller 130 may output the done signal DS to the second memory controller 140 when the eviction operation for the target data is completed.

Based on the prefetch signal PFS and the done signal DS, the second memory controller 140 may prefetch the Kth data DK stored in the second memory device 320a to the first memory device 310.

The prefetch operation may be performed after the eviction operation on first data D1 is completed. Therefore, when the second memory controller 140 prefetches the Kth data DK stored in the second memory device 320a to the first memory device 310 based on the done signal DS as well as the prefetch signal PFS, the number of data stored in the first memory device 310 may be maintained at 'K-1'.

After the eviction operation for the first data D1 and the prefetch operation for the Kth data DK have been performed, an eviction operation for the second to (K-1)th data D2 to D(K-1) and a prefetch operation for (K+1)th to Nth data D(K+1) to DN may be performed, in a manner similar to the eviction operation for the first data D1 and the prefetch operation for the Kth data DK. Also, though not shown in FIG. 5, when data access to the Kth through Nth data DK through DN is completed, an eviction operation on the Kth to Nth data DK to DN may be performed.

When the trigger command CMDT indicating a completion time point of the access to the first target data is not received, the eviction operation may be performed significantly later than the completion time point of the access to the first target data.

On the other hand, the queue management unit 120 according to the present disclosure may detect the completion time point of the access to the first target data through the trigger command CMDT received from the central processing unit 200 when the migration operation mode is a manual mode. Then, the queue management unit 120 may more quickly perform the eviction operation of the first target data and the prefetch operation of the second target data.

Accordingly, the data for which access has been completed may be moved to the second memory device 320a and data which is scheduled to be accessed may be quickly placed into the first memory device 310, thereby reducing system latency. As a result, the performance of the data processing system 10 may be improved. Furthermore, depending on whether the computing device 100 accesses data, the data may be quickly moved to the first memory device 310 or the second memory device 320a as appropriate, allowing the data processing system 10 to utilize memory resources efficiently.

When the migration operation mode is an active mode, the queue controller 121 may, based on the computing device 100 accessing the second data space Q2, generate an eviction signal EVS instructing an eviction operation for the first target data (e.g., the first data D1) and a prefetch signal PFS instructing a prefetch operation for the second target data (e.g., data stored in a Kth data space).

Based on the eviction signal EVS, the first memory controller 130 may evict the first data D1 from the first memory device 310 to the second memory device 320a. The first memory controller 130 may output the done signal DS to the second memory controller 140 when the eviction operation for the target data is completed.

The second memory controller 140 may prefetch the Kth data DK stored in the second memory device 320a to the first memory device 310 based on the prefetch signal PFS and the done signal DS.

When the migration operation mode is an active mode, the queue management unit 120 according to the present disclosure may determine that the access to data having a queue index earlier than a queue index of selected data has been completed if the computing device 100 accesses the selected data. The queue management unit 120 may detect a completion time point of the access of the data, based on a data path of the computing device 100 and the queue stored in the queue memory 122.

Accordingly, the data for which access has been completed may be moved to the second memory device 320a and data which is scheduled to be accessed may be quickly placed into the first memory device 310, thereby reducing system latency, so that the performance of the data processing system 10 may be improved. Furthermore, depending on whether the computing device 100 accesses data, the data may be quickly moved to the first memory device 310 or the second memory device 320a as appropriate, allowing the data processing system 10 to utilize memory resources efficiently.

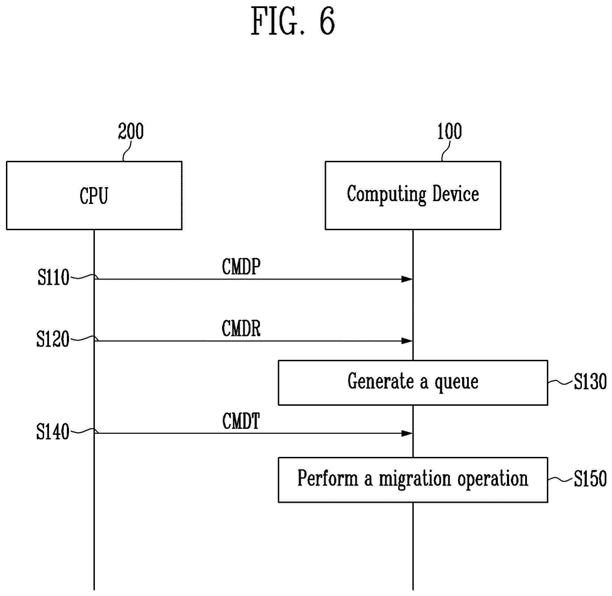

FIG. 6 is a flowchart illustrating a migration operation according to one embodiment of the present disclosure.

Referring to FIGS. 2 and 6, operations of the central processing unit 200 and computing device 100 are described when the migration operation mode is a manual mode.

At step S110, the central processing unit 200 may output the attribute command CMDP to the computing device 100.

At step S120, the central processing unit 200 may output the register command CMDR to the computing device 100.

At step S130, the computing device 100 may generate a queue based on the attribute command CMDP and the register command CMDR. In an embodiment, the computing device 100 may decode the attribute command CMDP to generate a first decoding signal, a second decoding signal, and a third decoding signal by decoding the attribute command CMDP. The computing device 100 may decode the register command CMDR to generate a register signal.

The computing device 100 may determine a type of the queue based on the first decoding signal and generate the queue including a data space based on a register signal. In FIG. 6, the computing device 100 is shown as receiving one register command CMDR, but the present disclosure is not limited thereto, and the computing device 100 may receive N register commands CMDR. When the computing device 100 receives the N register commands CMDR, the computing device 100 may create a queue including N data spaces.

At step S140, the central processing unit 200 may output the trigger command CMDT to the computing device 100.

At step S150, the computing device 100 may perform a migration operation. In an embodiment, the computing device 100 may perform an eviction operation on a first target data corresponding to the trigger command CMDT and a prefetch operation on a second target data determined by the second decoding signal.

For example, referring to FIG. 5, when the trigger command CMDT corresponds to the first data D1 and the second decoding signal indicates that 'K-1' data reside in the first memory device 310, the computing device 100 may perform an eviction operation for the first data D1 and a prefetch operation for the Kth data DK.

As described in FIG. 6, the computing device 100 may detect a completion time point of the access to the first target data through the trigger command CMDT received from the central processing unit 200. Accordingly, the queue management unit 120 may perform the eviction operation of the first data and the prefetch operation of the second target data more quickly.

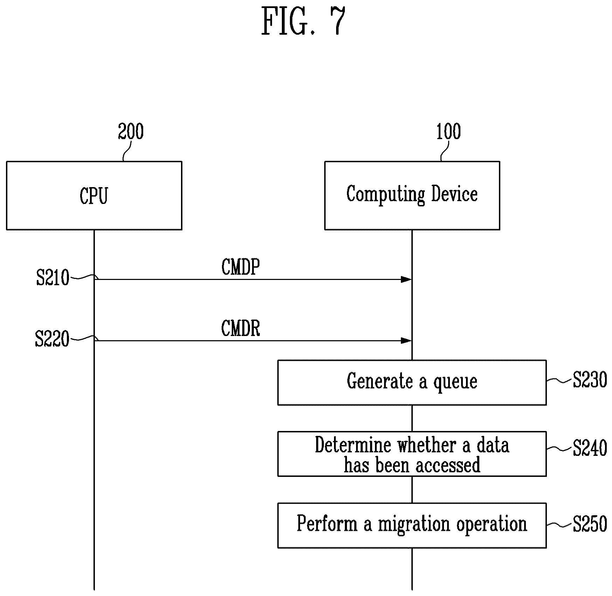

FIG. 7 is a flowchart illustrating a migration operation according to another embodiment of the present disclosure.

Referring to FIGS. 2 and 7, operations of the central processing unit 200 and computing device 100 are described when the migration operation mode is an active mode.

At step S210, the central processing unit 200 may output the attribute command CMDP to the computing device 100.

At step S220, the central processing unit 200 may output the register command CMDR to the computing device 100.

At step S230, the computing device 100 may generate a queue based on the attribute command CMDP and the register command CMDR. In an embodiment, the computing device 100 may decode the attribute command CMDP to generate a first decoding signal, a second decoding signal, and a third decoding signal. The computing device 100 may decode the register command CMDR to generate a register signal.

The computing device 100 may determine a type of queue based on the first decoding signal and generate a queue including a data space based on the register signal. In FIG. 7, the computing device 100 is shown as receiving one register command CMDR, but the present disclosure is not limited thereto, and the computing device 100 may receive N register commands CMDR. When the computing device 100 receives the N register commands CMDR, the computing device 100 may create a queue including N data spaces.

At step S240, the computing device 100 may determine whether selected data has been accessed. In an embodiment, when the computing device 100 accesses the selected data, the computing device 100 may determine data, having a queue index prior to a queue index of the selected data, as a first target data.

For example, when the Kth data has been accessed by the computing device 100, the computing device 100 may determine that the access to the (K-1)th data has been completed. The computing device 100 may determine the (K-1)th data as the first target data.

Based on the first target data and information regarding the number of data to be stored in the first memory device 310, the computing device 100 may determine a second target data.

At step S250, the computing device 100 may perform a migration operation. In an embodiment, once the first target data and the second target data are determined, the first target data may be moved from the first memory device 310 to the second memory device 320a, and the second target data may be moved from the second memory device 320a to the first memory device 310.

Referring to FIG. 5, when the second data D2 is accessed by the computing device 100 and the second decoding signal indicates that 'K-1' data reside in the first memory device 310, the computing device 100 may perform an eviction operation on the first data D1 and a prefetch operation on the Kth data DK.

According to the present disclosure, a data processing system capable of performing rapid data migration, and a method of operating a computing device included in the data processing system may be provided.

The scope of the present disclosure is defined by the accompanying claims, rather than by the detailed description, and all modifications or changes derived from the meaning and scope of the claims and equivalents thereof should be construed as falling within the scope of the present disclosure.

## Claims

1. A data processing system, comprising:
a first memory device;
a second memory device operating at a slower speed than the first memory device; and
a computing device generating a queue storing an order in which a plurality of layers are performed based on a plurality of register commands received from a host, and moving input data for performing each of the plurality of layers from the second memory device to the first memory device before each of the plurality of layers is performed according to the order stored in the queue.

2. The data processing system of claim 1, wherein the computing device determines input data of a previous layer as a first target data to be moved from the first memory device to the second memory device, and determines input data of a next layer as a second target data to be moved from the second memory device to the first memory device, based on the queue,
wherein the previous layer and the next layer are determined relative to a current layer being performed by the computing device in the order stored in the queue.

3. The data processing system of claim 2, wherein the computing device further receives an attribute command from the host, and comprises:
a decoder decoding the attribute command to generate a first decoding signal including information regarding a type of the queue, and a second decoding signal including information regarding a number of data to be stored in the first memory device; and
a queue management unit generating the queue based on the first decoding signal, determining data to be moved from the second memory device to the first memory device based on the second decoding signal, and storing the queue.

4. The data processing system of claim 3, wherein the decoder decodes the attribute command to generate a third decoding signal including information regarding a migration operation mode, and
wherein the migration operation mode is one of an active mode for determining the first target data based on the order stored in the queue, and a manual mode for determining the first target data based on a trigger command received from the host.

5. The data processing system of claim 4, wherein the decoder receives first to Nth register commands from the host, and decodes the first to Nth register commands to generate first to Nth register signals,
wherein when the queue management unit sequentially receives the first to Nth register signals from the decoder, the queue management unit sequentially stores first to Nth data corresponding to the first to Nth register signals in the queue in an order in which the first to Nth register signals are received,
wherein the first to Nth data correspond to input data of first to Nth layers, and
wherein N is a natural number greater than 1.

6. The data processing system of claim 5, wherein when the migration operation mode is the active mode, the queue management unit determines the input data used in the previous layer performed by the computing device as the first target data, based on the order stored in the queue.

7. The data processing system of claim 6, wherein when the migration operation mode is the active mode, the queue management unit determines a first data, which is input data of a first layer preceding a second layer, as the first target data, based on the computing device accessing a second data.

8. The data processing system of claim 7, wherein when the migration operation mode is the manual mode, the decoder receives a trigger command from the host and decodes the trigger command to generate a trigger signal, and the queue management unit determines data corresponding to the trigger signal as the first target data, and
wherein the decoder receives the trigger command after the decoder receives the Nth register command.

9. The data processing system of claim 8, wherein the queue management unit determines the second target data based on the number of data to be stored in the first memory device and the first target data,
wherein a Kth data is determined as the second target data when the number of data to be stored in the first memory device is 'K-1', and the first data is the first target data, and
wherein K is greater than 1 and less than N.

10. The data processing system of claim 9, wherein the computing device further comprises:
a first memory controller managing an eviction operation to move the first target data stored in the first memory device to the second memory device; and
a second memory controller managing a prefetch operation to move the second target data stored in the second memory device to the first memory device, wherein when the migration operation mode is the active mode, based on the computing device accessing new input data, the queue management unit outputs an eviction signal instructing the eviction operation to the first memory controller, and outputs a prefetch signal instructing the prefetch operation to the second memory controller,
wherein the first memory controller performs the eviction operation based on the eviction signal, and outputs a done signal to the second memory controller when the eviction operation is completed, and
wherein the second memory controller performs the prefetch operation based on the prefetch signal and the done signal.

11. The data processing system of claim 10, wherein when the migration operation mode is the manual mode, the queue management unit outputs the eviction signal instructing the eviction operation to the first memory controller, and outputs the prefetch signal instructing the prefetch operation to the second memory controller when the queue management unit receives the trigger signal.

12. A method of operating a computing device controlling a first memory device and a second memory device operating at a slower speed than the first memory device, the method comprising:
receiving a plurality of register commands from a host;
storing an order in which a plurality of layers are performed in a queue, based on the plurality of register commands;
determining a first target data to be moved from the first memory device to the second memory device, based on the queue; and
determining a second target data to be moved from the second memory device to the first memory device.

13. The method of claim 12, further comprising creating, by the computing device, the queue,
wherein the creating the queue comprises storing data corresponding to each of the plurality of register commands in the queue in an order in which the plurality of register commands are received.

14. The method of claim 13, further comprising, after creating the queue, receiving a trigger command from the host,
wherein the determining the first target data comprises determining input data used in a layer corresponding to the trigger command as the first target data in response to receiving the trigger command, and
wherein the determining the second target data comprises determining the second target data based on information regarding a number of data to be stored in the first memory device and the first target data.

15. The method of claim 13, wherein the determining the first target data comprises determining data having a queue index prior to a queue index of selected data as the first target data, when the computing device accesses the selected data after creating the queue, and
wherein the determining the second target data comprises determining the second target data based on information regarding a number of data to be stored in the first memory device and the first target data.
